# EUROPEAN PATENT SPECIFICATION

(11) **EP 3 993 945 B1**
(45) Date of publication and mention of the grant of the patent: **19.03.2025**
(21) Application number: 20836307.7
(22) Date of filing: 06.07.2020
(51) Int. Cl.: B23K 26/244, B23K 26/24, B23K 26/32, B23K 26/323, B23K 103/16

(54) **METHOD FOR COMBINING A STACK OF THICK PLATES INTO AN INTEGRAL WHOLE BY LASER WELDING**
VERFAHREN ZUM KOMBINIEREN EINES STAPELS DICKER PLATTEN AUF EINEM INTEGRALEN GANZEN DURCH LASERSCHWEISSEN
PROCÉDÉ DE COMBINAISON D'UN EMPILEMENT DE PLAQUES ÉPAISSES EN UN SEUL BLOC PAR SOUDAGE LASER

(30) Priority: 05.07.2019 NO 20190850
(43) Date of publication of application: 11.05.2022
(73) Proprietor: Cracon AS, 8642 Finneidfjord (NO)
(72) Inventor: OPSTAD, Karl Bernhard, 8642 Finneidfjord (NO)
(74) Representative: Acapo AS
(86) International application number: PCT/NO2020/050190
(87) International publication number: WO 2021/006745

(56) References cited:
- JP-A- 2005 305 461
- JP-A- 2008 126 298
- JP-A- 2017 168 267
- JP-A- H05 131 284
- JP-A- H05 131 284
- JP-A- S59 133 985
- US-A- 4 866 242
- US-A- 5 007 225
- US-A1- 2016 016 262
- US-A1- 2018 043 472
- US-A1- 2018 304 405
- US-B2- 10 286 491
- US-B2- 8 530 782

## Description

### Background of the Invention

### Field of the Invention

The invention relates to plate welding in general and more specifically a method for laser welding of thick metal plates.

### Background Art

State of the art is reflected in welding wherein a material in a first plate is locally heated above the melting point and attached to a second plate. Heating can be performed in many ways such as laser welding.

Laser welding as a method for joining metal sheets by welding through one plate and into an underlying plate is nothing new and is used, for example, extensively in the automotive industry. Typical plate thickness in the automotive industry is in the order of 1 mm.

Reinforcement of structures by conventional welding methods is only possible by welding along the edges of the reinforcing elements, and a large number of reinforcement plates may be required to reinforce a given area. This can, for example, require positioning and welding of ten smaller plates compared to one larger plate being required when laser technology is applied.

From prior art one should refer to JP 2001162388 which describes laser welding of two plates having a thickness of 0.8 - 2 mm, wherein the laser is moved in a pattern such as a band or stitching.

However, there has to be a gap between the plates during welding.

One should also refer to WO2018145222 which describes a method for laser welding of light metal bodies wherein one body is positioned to overlap the second body before welding the overlapping area using laser welding. The laser melts the first and the second body in a welding path in order to form a weld wherein the bodies can be thin plates having a thickness of 0.4 - 0.6 mm.

However, the welding has to be repeated in order to achieve sufficient strength.

Also one should refer to US 2015352672 which describes a method for laser welding of galvanised steel plates arranged to overlap, wherein the first plate has a thickness of 1.4 mm and the second has a thickness of 0.65 mm.

However also this requires a gap between the plates prior to welding.

Furthermore, one should refer to JP H07155974 which describes a method for welding of thin metal sheets in a manner similar to WO2018145222.

However, one of the plates is provided with protrusions forming a gap when the plates are brought into contact with each other.

One should also refer to EP 1919652 which describes a method for joining at least two thin plates using laser through-welding, wherein the weld extends along protrusions provided in one plate, having a line form.

However, at least one of the plates have to be provided with protrusions and moreover a protective layer is applied to at least one of the plates.

Finally, one should refer to EP 3112077 which describes laser welding of plates having a thickness of 0.8 mm, wherein the plates are arranged to overlap and laser through-welding is used.

However, this solution requires welding from both sides, forming a weld penetrating both plates. It is also specified that the laser is moved in a circle.

Furthermore one should refer to US 2018/043472 which relates to a method of laser welding a workpiece stack-up. The disclosed method includes directing a laser beam at a top surface of the workpiece stack-up to create a molten metal weld pool and, optionally, a keyhole, and further gyrating the laser beam to move a focal point of the laser beam along a helical path having a central helix axis oriented transverse to the top and bottom surfaces of the workpiece stack-up.

WO 2017/124216 relates to method of laser spot welding a workpiece stack-up(10) that includes at least two overlapping steel workpieces(12,14), at least one of which includes a surface coating(40), is disclosed.

Moreover, reference should be made to JPH05131284, relating to prevention of surface bead shape roughening while removing gas of metallic vapour.

JP2005305461 relates to a manufacturing method of a laser lap weld joint.

US5007225A discloses according to its abstract, composite metal panels comprise two parallel plates 1, 2 each laser-welded to an internally sandwiched corrugated stiffener plate.

US4866242A discloses according to its abstract, a 3-25 mm metal plate 22, 27, usually ferrous, is welded by a heavy-duty laser (5-25 kw) which melts through the plate and into a support member below to give a unitary weld.

JP2017168267A discloses according to a translation of its abstract, a conductive member that includes: a first member made of 6000 series aluminum alloy; a second member as to penetrate through the first member up to the inside of the second member in a portion where the first member and the second member are overlapped on each other.

US8530782B2 discloses according to its abstract, a body structure for rolling stock, where the body structure may include an outside sheathing of a side construction, and a plurality of reinforcement members joined to said outside sheathing interiorly of said outside sheathing.

JP405131284A discloses according to a translation of its abstract, a side shield system that a shield gas is brought to face toward the welding part with the laser beam and to jet to the upper surface of steel plate by the prescribed angle is adopted.

US20180304405A1 discloses according to its abstract, a method of laser welding a workpiece stack-up that includes at least two overlapping aluminum workpieces comprises advancing a laser beam relative to a plane of a top surface of the workpiece stack-up and along a spot weld travel pattern that includes one or more nonlinear inner weld paths and an outer peripheral weld path that surrounds the one or more nonlinear inner weld paths. Further, US10286491B2 discloses a laser welding method, wherein steel plates are welded together and generation of bubbles in the laser welding step is suppressed.

There is therefore a need for a method and a system to overcome the above-mentioned problems.

### Summary of the Invention

### Problems to be Solved by the Invention

Therefore, a main objective of the present invention is to provide a method for combination of two or more preferably thick stacked metal plates by welding.

### Means for Solving the Problems

The objective is achieved according to the invention by a method for welding of thick plates as defined in the preamble of claim 1, having the features of the characterising portion of claim 1.

A number of non-exhaustive embodiments, variants or alternatives of the invention are defined by the dependent claims.

The present invention attains the above-described objective by a method for welding one or more thick plates into a welded assembly.

In a first aspect of the invention a method for welding a thick plate into a welded assembly is provided as defined in claim 1. Preferred embodiments are defined in the dependent claims.

In a second aspect of the invention a use of any of the above methods for strengthening an existing plate by welding in a second strengthening plate, is provided, wherein the second plate is a thick plate having a thickness greater than 3 mm.

In a non-claimed variation of the invention a welded assembly made using any of the above methods, is provided.

### Effects of the Invention

The present invention comprises a technological advantage over known systems and methods by use of thick plates, that is plates thicker than 3 mm.

The present invention provides several further advantageous effects:
it makes it possible to weld in strengthening members,
it makes it possible to weld corrosion resistant metal plates over metals susceptible to corrosion such as carbon steel,
it makes it possible to repair by welding in plates over a defect,
it makes it possible to apply a small number of large plates rather than many edge-welded smaller plates,
it makes it possible to make weld seams in one pass, and
it makes it possible to complete a welding task much faster.

Importantly it makes it possible to weld in a continuous process without the use of microscopic beam patterns such as gyrations to melt a keyhole for letting gases escape.

### Brief Description of the Drawings

The above and further features of the invention are set forth with particularity in the appended claims and together with advantages thereof will become clearer from consideration of the following detailed description of an [exemplary] embodiment of the invention given with reference to the accompanying drawings.

The invention will be further described below in connection with exemplary embodiments which are schematically shown in the drawings, wherein:
Fig. 1 shows a strengthening plate overlaid a bulkhead plate, with intersecting welding lines,
Fig. 2 shows a cross section of Fig. 1, and
Fig. 3 shows variant of a cross section of Fig. 1 with an interposer,
Fig. 4 shows an embodiment of an open pattern in the form of a plurality of meanders,
Fig. 5 shows an embodiment of an open pattern in the form of a spiral,
Fig. 6 shows an embodiment of a closed pattern in the form of a plurality of circles, and
Fig. 7 shows an embodiment of a closed pattern in the form of a plurality of polygons, specifically pentagons.

### Description of the Reference Signs

The following reference numbers and signs refer to the drawings:

| | |
|---|---|
| 100 | A welded assembly |
| 110 | A first plate, or bulkhead plate |
| 120 | A second plate, or strengthening plate |
| 130 | Welding seams |
| 132 | Horizontal welding seams |
| 134 | Vertical welding seams |
| 136 | Peripheral welding seam |
| 140 | A third plate, interposer |

### Detailed Description of the Invention

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented, or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim. Nevertheless, the invention as such and the intended scope of protection is defined exclusively by the appended claims.

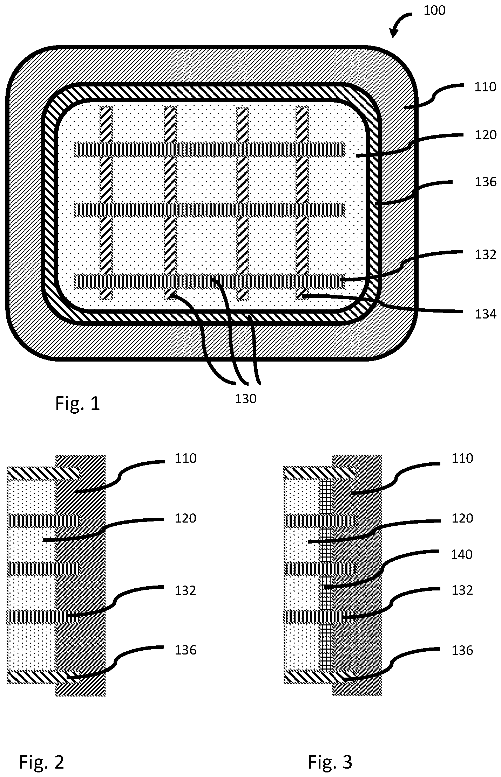

The invention will be further described in connection with exemplary embodiments which are schematically shown in the drawings, wherein Fig. 1 shows a strengthening plate overlaid a bulkhead plate, with intersecting welding lines.

Thin plate welding is well known, wherein plates are up to 3 mm thick. Many metals oxidise easily and the oxides release oxygen gas when the metal is heated and liquefied. This causes bubbles and welding defects that should be avoided.

In the context of this disclosure a thin plate is less than 3 mm thick, whereas a thick plate is at least 3 mm thick, typically 6 - 15 mm thick.

### Principles forming the basis of the invention

Welding is performed by heating metal until it is locally liquefied and bonds two or more bodies, typically plates. The inventor has realised that thick plates can be laser welded without formation of significant welding defects. Typically steel is suitable for this method of welding, but light metals with an insulating, protective oxide layer with a high melting point, such as aluminium and magnesium, are less suitable.

The embodiment of the method for forming a welded assembly 100 according to the invention shown in Fig. 1 and 2 comprises placing a first plate 110 in overlapping contact with a second plate 120, wherein the plates are of materials that do not form unacceptable bubbling in the metal when heated.

The second plate 120 is of a thickness greater than 3 mm. The first plate can be thicker or thinner. Normally if the first plate is thinner one would want to weld from the opposite site. In some cases that can be impossible, for instance due to other obstructions on the inside. For strengthening the second plate is preferably thicker than 4 mm, in order to gain extra strength. More preferably the second plate is thicker than 6 mm in order to gain extra strength.

Next the plates are through welded using laser welding. The welding seams 130 can be a peripheral welding seam and interior welding seams 132, 134 applied.

If deemed necessary, the operations described above, can be repeated with an additional plate welded to plate 110 from the other side.

More than one plate can also be welded from one side with additional plate(s) welded onto plate 120. Further plates adds strength and using thick plates means fewer welding sequences have to be undertaken.

### Best Modes of Carrying Out the Invention

In a typical application of an embodiment of the method for forming a welded assembly 100 according to the invention the first plate 110 is a bulkhead plate of a ship or a tank. A second plate 120 for strengthening, repair and/or corrosion protection is brought in overlapping contact with the bulkhead plate. Next a laser is used to perform through welding between the plates, typically starting with an inner pattern. Typically a laser source with a power of 4 - 30 kW is used, which gives an effective welding speed of 3 - 10 m / min. The laser beam is transferred from the source to the workpiece through an optical fibre.

Fig. 1 shows how horizontal 132 and vertical 134 welding seams are applied to the second plate 120 placed over the bulkhead plate 110. It has been found that a pattern of perpendicular lines provides good strengthening when the plates are subjected to forces straining the plates. It is welded along the periphery 136. These lines form a rectangular pattern.

Where necessary several plates will be required to cover the complete area, where strengthening is required. In such cases, the interface between adjoining plates will be butt welded and connected to the underlying plate in one laser welding operation.

Fig. 2 shows a cross section of Fig. 1 and shows how the welding seams penetrate the strengthening plate and into the bulkhead plate.

It has been found that welding of ferrous materials works well, including partially corroded steel. Also nickel, copper, and titanium have been found to work well.

### Alternative Embodiments

A number of variations on the above can be envisaged. For instance the horizontal and vertical pattern of welding seams can be replaced by a closed geometric pattern enclosing a volume such as hexagon pattern, and circles, or open geometric pattern letting gas escape by not enclosing a volume such as spots, spirals, and meanders, and other patterns that substantially fill the contact area inside the periphery. The degree to which the area is covered is determined by the requirement for strength and time constraints.

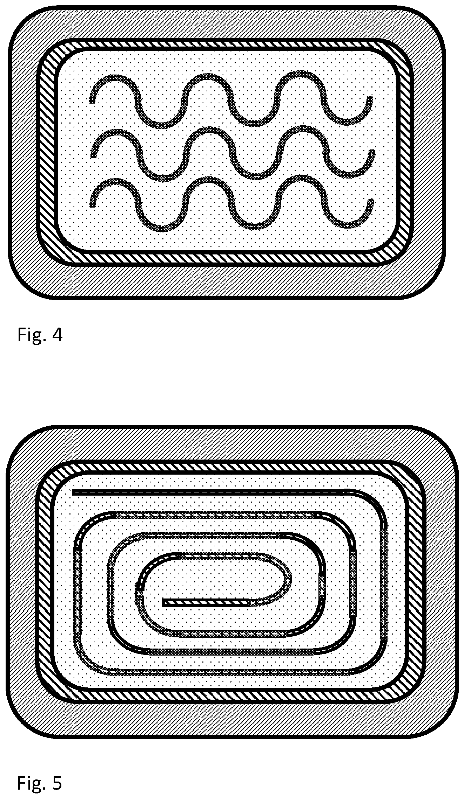

Fig. 4 shows an embodiment of an open pattern in the form of a plurality of meanders. The meanders substantially cover the area defined by the second plate. The patterns can be unidirectional or in boustrophedonic order in order to save time.

Fig. 5 shows an embodiment of an open pattern in the form of a spiral, in this case a single spiral that substantially covers the area defined by the second plate. This pattern will weld the plates in a single movement.

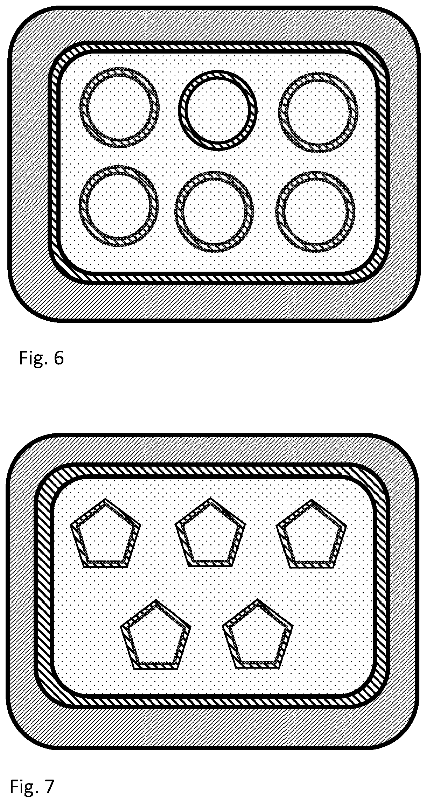

Fig. 6 shows an embodiment of a closed pattern in the form of a plurality of circles, that together substantially cover the area defined by the second plate. In embodiments not shown the circles can be overlapping or concentric.

Fig. 7 shows an embodiment of a closed pattern in the form of a plurality of polygons, specifically pentagons.

Fig. 3 shows an embodiment where a third plate 140 is applied as an interposer between the first and the second plate. During welding the second and third plate are both welded through and into the first plate.

It is also possible to weld further plates (not shown) on top of existing plates 120, 140 in subsequent welding. This is advantageous in cases where the single plates are too heavy to position comfortably. Instead a plurality of thinner plates are sequentially welded into a composite.

It is also within the scope of this invention to perform the above described processes on both sides of a plate such as a bulkhead plate, including sequential welding of a plurality of plates.

In a further variation the plate 120 can be subdivided into smaller plates that are still thick, wherein the plates are butt welded together. This is another useful way to overcome the problems involving heavy plates in an environment with many obstructions.

### Industrial Applicability

The invention according to the application finds use in strengthening of existing structures as well as repair such as covering holes and damages.

## Claims

1. A method for welding a thick plate (110, 120) into a welded assembly (100), comprising the steps:
a) on a first plate (110) placing a second plate (120) having a periphery, in direct contact with the first plate (110),
wherein the first and second plates (110, 120) are of materials that do not form unacceptable bubbling in the weld when heated and are metals that are selected from the group comprising ferrous materials, nickel alloys and copper alloys, and the group comprising titanium and zirconium, and
wherein the second plate is a thick plate having a thickness greater than 3 mm, and
b) through welding the second plate to the first plate,
wherein the through welding is performed using laser welding,
wherein the first and second plates are welded within and along the periphery of the second plate, and
wherein the first and second plates are welded within the periphery of the second plate using a pattern from the group comprising closed geometric patterns enclosing a volume such as rectangular pattern, hexagon pattern, and circles, and open geometric patterns such as spots, spirals, and meanders.

2. The method according to claim 1, further comprising the step of positioning a third plate (140) as an interposer between the first and second plate before step b), and step b) also involves welding through the third plate (140).

3. The method according to claim 1 - 2, wherein the through welding is performed using laser welding with a power of 4 - 30 kW.

4. The method according to claim 1 - 3, wherein the second plate (120) comprises a plurality of adjoining plates, wherein the adjoining plates are bonded together and welded to the first plate in one operation.

5. The method according to claim 1 - 4, wherein subsequent plates are welded according to the method according claim 1 - 4, on plates having been welded according to the method according claim 1 - 4.

6. The method according to claim 1 - 5, wherein subsequent plates are welded on an opposite side of the welded assembly (100).

7. A use of a method according to claims 1 - 6 for strengthening an existing plate (110) by welding in a second strengthening plate (120), wherein the second plate is a thick plate having a thickness greater than 3 mm.

## Patentansprüche

1. Verfahren zum Einschweißen einer dicken Platte (110, 120) in eine Schweißbaugruppe (100), umfassend die folgenden Schritte:
a) auf einer ersten Platte (110) Anordnen einer zweiten Platte (120) mit einem Umfang in direktem Kontakt mit der ersten Platte (110),
wobei die erste und die zweite Platte (110, 120) aus Materialien bestehen, die keine unzulässigen Blasen in der Schweißnaht beim Erhitzen bilden und Metalle sind, die ausgewählt sind aus der Gruppe umfassend Eisenwerkstoffe, Nickellegierungen und Kupferlegierungen, und der Gruppe umfassend Titan und Zirkonium, und
die zweite Platte eine dicke Platte mit einer Dicke von mehr als 3 mm ist, und
b) Durchschweißen der zweiten Platte mit der ersten Platte, wobei das Durchschweißen unter Verwendung von Laserschweißen durchgeführt wird,
wobei die erste und die zweite Platte innerhalb und entlang des Umfangs der zweiten Platte geschweißt sind und
wobei die erste und die zweite Platte innerhalb des Umfangs der zweiten Platte unter Verwendung eines Musters aus der Gruppe geschweißt sind, umfassend geschlossene geometrische Muster, die ein Volumen einschließen, wie ein rechteckiges Muster, ein Sechseckmuster und Kreise, und offene geometrische Muster, wie Punkte, Spiralen und Mäander.

2. Verfahren nach Anspruch 1, ferner umfassend den Schritt des Positionierens einer dritten Platte (140) als Zwischenlage zwischen der ersten und der zweiten Platte vor Schritt b), und wobei Schritt b) auch das Durchschweißen der dritten Platte (140) beinhaltet.

3. Verfahren nach Anspruch 1 bis 2, wobei das Durchschweißen unter Verwendung von Laserschweißen mit einer Leistung von 4 - 30 kW durchgeführt wird.

4. Verfahren nach Anspruch 1 bis 3, wobei die zweite Platte (120) eine Vielzahl aneinandergrenzender Platten umfasst, wobei die aneinandergrenzenden Platten miteinander verbunden und an die erste Platte in einem Vorgang geschweißt sind.

5. Verfahren nach Anspruch 1 bis 4, wobei nachfolgende Platten nach dem Verfahren nach Anspruch 1 bis 4 an Platten geschweißt sind, die nach dem Verfahren nach Anspruch 1 bis 4 geschweißt wurden.

6. Verfahren nach Anspruch 1 bis 5, wobei nachfolgende Platten auf einer gegenüberliegenden Seite der geschweißten Baugruppe (100) geschweißt sind.

7. Verwendung eines Verfahrens nach den Ansprüchen 1 bis 6 zum Verstärken einer vorhandenen Platte (110) durch Einschweißen einer zweiten Verstärkungsplatte (120), wobei die zweite Platte eine dicke Platte mit einer Dicke von mehr als 3 mm ist.

## Revendications

1. Procédé pour souder une plaque épaisse (110, 120) dans un ensemble soudé (100), comprenant les étapes :
a) sur une première plaque (110) placer une deuxième plaque (120) ayant une périphérie, en contact direct avec la première plaque (110),
dans lequel les première et deuxième plaques (110, 120) sont constituées de matériaux qui ne forment pas de bulles inacceptables dans la soudure lorsqu'ils sont chauffés et sont des métaux choisis dans le groupe comprenant les matériaux ferreux, les alliages de nickel et les alliages de cuivre, et le groupe comprenant le titane et le zirconium, et
dans lequel la deuxième plaque est une plaque épaisse ayant une épaisseur supérieure à 3 mm, et
b) un soudage traversant la deuxième plaque à la première plaque,
dans lequel le soudage traversant est effectué à l'aide d'un soudage au laser,
dans lequel les première et deuxième plaques sont soudées à l'intérieur et le long de la périphérie de la deuxième plaque, et
dans lequel les première et deuxième plaques sont soudées à l'intérieur de la périphérie de la deuxième plaque en utilisant un motif du groupe comprenant des motifs géométriques fermés entourant un volume tel qu'un motif rectangulaire, un motif hexagonal et des cercles, et des motifs géométriques ouverts tels que des taches, des spirales et des méandres.

2. Procédé selon la revendication 1, comprenant en outre l'étape consistant à positionner une troisième plaque (140) en tant qu'interposeur entre la première et la deuxième plaque avant l'étape b), et l'étape b) implique également un soudage traversant la troisième plaque (140).

3. Procédé selon les revendications 1 à 2, dans lequel le soudage traversant est effectué en utilisant un soudage au laser avec une puissance de 4 - 30 kW.

4. Procédé selon les revendications 1 à 3, dans lequel la deuxième plaque (120) comprend une pluralité de plaques adjacentes, dans lequel les plaques adjacentes sont liées ensemble et soudées à la première plaque en une seule opération.

5. Procédé selon les revendications 1 à 4, dans lequel les plaques suivantes sont soudées selon le procédé selon les revendications 1 à 4, sur des plaques ayant été soudées selon le procédé selon les revendications 1 à 4.

6. Procédé selon les revendications 1 à 5, dans lequel les plaques suivantes sont soudées sur un côté opposé de l'ensemble soudé (100).

7. Utilisation d'un procédé selon les revendications 1 à 6 pour renforcer une plaque existante (110) par soudage dans une deuxième plaque de renforcement (120), dans laquelle la deuxième plaque est une plaque épaisse ayant une épaisseur supérieure à 3 mm.
